(19) Europäisches Patentamt
European Patent Office
Office européen des brevets

(11) **EP 3 100 334 B1**

(12) **EUROPÄISCHE PATENTSCHRIFT**

(45) Veröffentlichungstag und Bekanntmachung des Hinweises auf die Patenterteilung:
**21.08.2019   Patentblatt 2019/34**

(21) Anmeldenummer: **15701751.8**

(22) Anmeldetag: **23.01.2015**

(51) Int Cl.:
*B60W 10/26* (2006.01)   *B60W 20/13* (2016.01)
*B60L 58/18* (2019.01)   *B60L 58/19* (2019.01)
*B60L 58/21* (2019.01)   *H02J 7/00* (2006.01)
*B60R 16/033* (2006.01)

(86) Internationale Anmeldenummer:
**PCT/EP2015/051325**

(87) Internationale Veröffentlichungsnummer:
**WO 2015/110566 (30.07.2015 Gazette 2015/30)**

(54) **BORDNETZ UND VERFAHREN ZUM BETRIEB EINES BORDNETZES**

ELECTRICAL SYSTEM AND METHOD FOR OPERATING AN ELECTRICAL SYSTEM

RÉSEAU DE BORD ET PROCÉDÉ POUR FAIRE FONCTIONNER UN RÉSEAU DE BORD

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.01.2014   DE 102014201345**

(43) Veröffentlichungstag der Anmeldung:
**07.12.2016   Patentblatt 2016/49**

(73) Patentinhaber:
• **Robert Bosch GmbH**
  **70442 Stuttgart (DE)**
• **SAMSUNG SDI CO., LTD.**
  **Yongin-si, Gyeonggi-do**
  **446-577 (KR)**

(72) Erfinder: **FINK, Holger**
  **70567 Stuttgart (DE)**

(74) Vertreter: **Bee, Joachim**
  **Robert Bosch GmbH, C/IPE**
  **P.O. Box 30 02 20**
  **70442 Stuttgart (DE)**

(56) Entgegenhaltungen:
**EP-A1- 1 562 252**      **EP-A1- 1 562 252**
**EP-A2- 2 053 717**      **EP-A2- 2 053 717**
**EP-A2- 2 496 437**      **EP-A2- 2 496 437**
**WO-A1-01/37393**       **WO-A1-01/37393**
**WO-A2-2011/055217**    **DE-A1- 10 057 259**
**DE-A1- 10 057 259**     **DE-A1-102009 028 147**
**DE-A1-102009 028 147**  **DE-A1-102012 003 309**
**DE-A1-102012 010 711**  **DE-A1-102012 010 711**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Stand der Technik

Die Erfindung betrifft ein Bordnetz und ein Verfahren zum Betrieb eines Bordnetzes für ein Kraftfahrzeug.

Weiterhin wird ein Kraftfahrzeug mit einem derartigen Bordnetz angegeben, sowie ein Batteriemanagementsystem und ein Computerprogramm, die zur Ausführung der beschriebenen Verfahren eingerichtet sind.

In Kraftfahrzeugen mit Verbrennungsmotor wird zur Versorgung des elektrischen Anlassers oder Starters für den Verbrennungsmotor sowie weiterer elektrischer Vorrichtungen des Kraftfahrzeuges ein Bordnetz vorgesehen, welches standardmäßig mit 12 Volt betrieben wird. Beim Starten des Verbrennungsmotors wird über das Bordnetz von einer Starterbatterie eine Spannung einem Starter zur Verfügung gestellt, welcher den Verbrennungsmotor startet, wenn beispielsweise durch ein entsprechendes Startersignal ein Schalter geschlossen wird. Ist der Verbrennungsmotor gestartet, treibt dieser einen elektrischen Generator an, welcher dann eine Spannung von etwa 12 Volt erzeugt und über das Bordnetz den verschiedenen elektrischen Verbrauchern im Fahrzeug zur Verfügung stellt. Der elektrische Generator lädt dabei auch die durch den Startvorgang belastete Starterbatterie wieder auf. Wird die Batterie über das Bordnetz geladen, kann die tatsächliche Spannung auch über der Nennspannung liegen, z. B. bei 14 V oder bei 14,4 V.

Das Bordnetz mit 12 V, bzw. 14 V Spannung wird im Rahmen der vorliegenden Offenbarung auch als ein Niederspannungsbordnetz bezeichnet.

Es ist bekannt, in Elektro- und Hybridfahrzeugen ein weiteres Bordnetz mit einer Nennspannung von 48 V zu verwenden, welches im Rahmen der Erfindung auch als ein Hochspannungsbordnetz bezeichnet wird.

Die Druckschrift WO 2011/055217 A2 offenbart eine elektrische Antriebseinheit für ein Fahrzeug, umfassend eine Basisbatterie, einen Aufwärtswandler, der die von der Basisbatterie gelieferte Spannung in eine Zielspannung umwandelt, um elektrische Energie zu liefern Wechselrichter, eine elektrische Energieleitung, die den Wechselrichter mit dem Aufwärtswandler verbindet, und eine erste Batterie und eine zweite Batterie, deren jeweilige positive Elektroden mit einem Knoten verbunden sind, die auf der elektrischen Energieleitung vorgesehen ist, um dem Wechselrichter elektrische Energie zuzuführen.

Die Druckschrift WO 01/37393 A1 offenbart ein elektrisches System, das eine erste Gleichspannung von einer Energiequelle, wie einer Batterie, in eine zweite niedrigere Gleichspannung umwandelt, so dass elektrische Komponenten, die die erste Gleichspannung nicht tolerieren können, von der von der Energie abgegriffenen niedrigeren Spannung versorgt werden können.

Die Druckschrift EP 2 053 717 A2 offenbart eine Entladungssteuerung für eine Mehrfachzellenbatterie, die eine Vielzahl von Speicherzellen aufweist, die in Reihe miteinander verbunden sind.

Offenbarung der Erfindung

Erfindungsgemäß umfasst ein Bordnetz für ein Kraftfahrzeug ein Niederspannungsteilnetz für zumindest einen Niederspannungsverbraucher und ein Hochspannungsteilnetz für zumindest einen Hochspannungsverbraucher und einen elektrischen Generator, wobei das Hochspannungsteilnetz mit dem Niederspannungsteilnetz über eine Koppeleinheit verbunden ist, welche eingerichtet ist, dem Hochspannungsteilnetz Energie zu entnehmen und dem Niederspannungsteilnetz zuzuführen, wobei das Hochspannungsteilnetz eine Batterie aufweist, die eingerichtet ist, die Hochspannung zu erzeugen und an das Hochspannungsteilnetz auszugeben und die zumindest zwei Batterieeinheiten mit Einzelspannungsabgriffen aufweist, die an die Koppeleinheit geführt sind. Dabei ist vorgesehen, dass die Koppeleinheit eingerichtet ist, die Batterieeinheiten dem Niederspannungsteilnetz selektiv zuzuschalten und dass das Niederspannungsteilnetz (21) zumindest einen weiteren Energiespeicher (28) aufweist, welcher eingerichtet ist, die Niederspannung zu erzeugen und an das Niederspannungsteilnetz (21) auszugeben, wobei ein Umschaltvorgang zu solchen Zeitpunkten erfolgt, bei denen ein Bordnetzstrom möglichst gering ist, beispielsweise durch Auswertung eines Signals für den Bordnetzstrom und davon abhängiger Ansteuerung der Schalter der Koppeleinheit erfolgen, und/oder eine Synchronisierung mit einem Verbrauchermanagementsystem erfolgt, um Hochleistungsverbraucher, wie z.B. Heizsysteme, kurzzeitig abzuschalten, um den Umschaltvorgang ohne einen nennenswerten Spannungseinbruch zu ermöglichen.

Die Erfindung besitzt den Vorteil, dass durch das Niederspannungsteilnetz elektrische Verbraucher betrieben werden können, die auf eine niedrige erste Spannung ausgelegt sind, und für Hochleistungsverbraucher das Hochspannungsteilnetz bereitsteht, d.h. das Teilbordnetz mit der gegenüber der ersten Spannung erhöhten Spannung. Die Versorgung des Niederspannungsteilnetzes wird den Lade- und Entladevorgängen im Hochspannungsteilnetz überlagert. Die Niederspannungsteilnetzversorgung über das Hochspannungsteilnetz findet dabei unidirektional statt, d. h. die Koppeleinheit stellt den Energietransfer bevorzugt nur in eine Richtung bereit.

Die Begriffe "Batterie" und "Batterieeinheit" werden in der vorliegenden Beschreibung, dem üblichen Sprachgebrauch angepasst, für Akkumulator bzw. Akkumulatoreinheit verwendet. Die Batterie umfasst eine oder mehrere Batterieeinheiten, die eine Batteriezelle, ein Batteriemodul, einen Modulstrang oder ein Batteriepack bezeichnen können. Die Batteriezellen sind dabei vorzugsweise räumlich zusammengefasst und schaltungstechnisch miteinander verbunden, beispielsweise seriell oder parallel zu Modulen verschaltet. Mehrere Module können so genannte Batteriedirektkonverter (BDC, battery direct converter) bilden und mehrere Batteriedirektkonverter einen Batteriedirektinverter (BDI, battery direct inverter).

Das Bordnetz kann sowohl bei stationären Anwendungen, z.B. bei Windkraftanlagen, als auch in Fahrzeugen, z.B. in Hybrid- und Elektrofahrzeugen, zum Einsatz kommen.

Insbesondere kann das Bordnetz bei Fahrzeugen eingesetzt werden, die Start-Stopp-Systeme aufweisen.

Das vorgestellte System, d. h. das Bordnetz und das Batteriemanagementsystem eignet sich insbesondere für den Einsatz in Fahrzeugen, die einen 48-Volt-Generator und einen 14-Volt-Starter aufweisen, wobei der 14-Volt-Starter vorzugsweise für Start-/Stopp-Systeme ausgelegt ist.

Das vorgestellte System eignet sich insbesondere für den Einsatz in Fahrzeugen, die ein Boost-Rekuperationssystem (BRS) aufweisen. Bei Boost-Rekuperationssystemen (BRS) wird elektrische Energie bei Bremsvorgängen, bei Bergabfahrten oder im Segelbetrieb gewonnen, um damit die elektrischen Verbraucher zu versorgen. Das BRS erhöht die Effizienz des Systems, so dass Kraftstoff eingespart werden kann bzw. die Emissionen verringert werden können. Die Batterie im Hochspannungsteilnetz unterstützt entweder den Verbrennungsmotor, was als so genannter Boost bezeichnet wird, oder es wird bei niedrigen Geschwindigkeiten für kurze Strecken sogar für rein elektrisches Fahren eingesetzt, z.B. bei einem elektrischen Ein- und Ausparken.

Die Erfindung ist durch die Ansprüche definiert. Vorteilhafte Weiterbildungen und Verbesserungen des im unabhängigen Anspruch angegebenen Gegenstands sind durch die in den abhängigen Ansprüchen aufgeführten Maßnahmen möglich.

So ist von Vorteil, wenn die selektiv zuschaltbaren Batterieeinheiten jeweils zur Bereitstellung der Niederspannung ausgelegt sind. Die Batterieeinheiten können damit abwechselnd beansprucht werden, die Niederspannung bereitzustellen, z. B. um ein Start-Stopp-System zu unterstützen, was zu einer erhöhten Lebensdauer der Batterieeinheit führt.

Nach einer bevorzugten Ausführungsform weist die Koppeleinheit zumindest einen rückwärtssperrfähigen Schalter auf. Bevorzugt eignen sich die rückwärtssperrfähigen Schalter zur Zu- und Wegschaltung einer selektiv zuschaltbaren Batterieeinheit. Diese Schalter besitzen die Eigenschaft, dass sie im Zustand "ein" einen Stromfluss nur in eine Richtung ermöglichen und im Zustand "aus" eine Sperrspannung beiderlei Polarität aufnehmen können.

Nach einer bevorzugten Ausführungsform weist das Niederspannungsteilnetz zumindest einen Energiespeicher auf, welcher eingerichtet ist, die Niederspannung zu erzeugen und an das Niederspannungsteilnetz auszugeben. Der Energiespeicher kann auch als ein Doppelschichtkondensator ausgelegt sein. Da das Niederspannungsteilnetz nach einigen Ausführungsformen einzig mit den Batterieeinheiten des Hochspannungsteilnetzes betrieben werden kann, ist der im Niederspannungsteilnetz angeordnete Energiespeicher im Prinzip für das Bordnetz redundant. Der Einsatz des im Niederspannungsteilnetz angeordneten Energiespeichers ist aber dann besonders vorteilhaft, wenn die Batterieeinheiten des Hochspannungsteilnetz Lithium-Ionen-Batterien umfassen. Lithium-Ionen-Batterien haben den Nachteil, dass sie in bestimmten Einsatzgebieten bzw. Situationen, insbesondere beispielsweise bei niedrigen Temperaturen, nicht die optimale Leistung bereitstellen können. Der im Niederspannungsteilnetz angeordnete Energiespeicher gleicht dies aus, so dass ein auch in extremeren Situationen beständiges System bereitgestellt wird.

Nach einer bevorzugten Ausführungsform weist das Niederspannungsteilnetz zumindest einen Kondensator auf. Der Kondensator ist bevorzugt dazu eingerichtet, die Niederspannung bei einem Wechsel der zugeschalteten Batterieeinheit zu stabilisieren. Die Dimensionierung des Kondensators ist dabei bevorzugt gemäß

$$ C = \frac{I_{\max} \cdot t_{umschalt}}{\Delta U_{\max}} \ , $$

gewählt, wobei $I_{\max}$ der maximale Bordnetzstrom ist, der während Umschaltvorgängen im Niederspannungsteilnetz fließen soll, $t_{umschalt}$ die Zeitdauer, während der keine Batterieeinheit für die Versorgung bereitsteht, und $\Delta U_{\max}$ die maximal zulässige Veränderung der Bordnetzspannung während des Umschaltvorgangs. Der Kondensator eignet sich außerdem bevorzugt auch als Energiespeicher, welcher eingerichtet ist, zumindest kurzfristig die Niederspannung zu erzeugen und an das Niederspannungsteilnetz auszugeben.

Nach einer bevorzugten Ausführungsform weist das Niederspannungsteilnetz einen Starter auf. Der Starter ist vorzugsweise für Start-/Stopp-Systeme ausgelegt und eingerichtet, einen Schalter zum Starten eines Verbrennungsmotors zu betätigen.

Bei einem erfindungsgemäßen Verfahren zum Betrieb eines Bordnetzes für ein Kraftfahrzeug, wobei das Bordnetz ein Niederspannungsteilnetz für zumindest einen Niederspannungsverbraucher und ein Hochspannungsteilnetz für zumindest einen Hochspannungsverbraucher und einen elektrischen Generator aufweist, wobei das Hochspannungsteilnetz mit dem Niederspannungsteilnetz über eine Koppeleinheit verbunden ist, welche eingerichtet ist, dem Hochspannungsteilnetz Energie zu entnehmen und dem Niederspannungsteilnetz zuzuführen, wobei das Hochspannungsteilnetz eine Batterie aufweist, die eingerichtet ist, die Hochspannung zu erzeugen und an das Hochspannungsteilnetz auszugeben, und die zumindest zwei Batterieeinheiten mit Einzelspannungsabgriffen aufweist, die an die Koppeleinheit geführt sind, wobei die Koppeleinheit eingerichtet ist, die Batterieeinheiten dem Niederspannungsteilnetz selektiv zuzuschalten, ist vorgesehen, dass diejenige Batterieeinheit dem Niederspannungsteilnetz zugeschaltet wird, welche den höchsten Ladezustand aufweist.

Das erfindungsgemäße Verfahren hat den Vorteil, dass sich im Betrieb ein Zustand einstellt, bei welchem die Batterieeinheiten annähernd einen gleichen Ladezustand aufweisen. Hierdurch wird insbesondere erreicht, dass die Zellen gleichmäßig altern, d.h. beispielsweise einen gleichen Innenwiderstand und eine gleiche Kapazität aufweisen. Die Versorgung des Niederspannungsteilnetzes wechselt dabei von einer Batterieeinheit auf diejenige Batterieeinheit, die einen entsprechend höheren Ladezustand aufweist, als die aktuell zur Versorgung des Niederspannungsteilnetzes genutzte Batterieeinheit.

Ein weiterer Vorteil ist, dass die Anforderungen für die Startvorgänge im Niederspannungsteilnetz stets erfüllt werden, da jeweils diejenige Batterieeinheit eingesetzt wird, welche aktuell die beste Performance aufweist. Da die Versorgung des Niederspannungsteilnetzes den Lade- und Entladevorgängen im Hochspannungsteilnetz überlagert ist und die Niederspannungsteilnetzversorgung unidirektional stattfindet, wird durch das erfindungsgemäße Verfahren sichergestellt, dass stets die Batterieeinheit mit dem höchsten Ladezustand schneller entladen wird bzw. langsamer geladen wird als die anderen Teilbatterien. Dies hat eine Symmetrisierung der Ladezustände der Teilbatterien zur Folge.

Nach einer bevorzugten Ausführungsform erfolgt ein Wechsel der zugeschalteten Batterieeinheit bei einer Überschreitung eines Schwellwerts einer Ladezustandsdifferenz der Batterieeinheiten. Hierdurch wird erreicht, dass bei gleichem oder ähnlichem Ladezustand der Batterieeinheiten kein schneller, ständiger Wechsel von einer Batterieeinheit auf die nächste erfolgt, gefolgt von einem Rückwechsel, sobald jeweils die ungenutzte Batterieeinheit den höchsten Ladezustand aufweist. Besonders bevorzugt ist der Schwellwert der Ladezustandsdifferenz der Batterieeinheiten ein definierter Wert zwischen 0,5% und 20%, bevorzugt zwischen 1% und 5%, besonders bevorzugt etwa 2%.

Nach einer bevorzugten Ausführungsform erfolgt der Wechsel der zugeschalteten Batterieeinheit, indem in einem ersten Schritt eine Strom führende Batterieeinheit abgeschaltet wird und hiernach in einem zweiten Schritt eine ausgewählte weitere Batterieeinheit zugeschaltet wird. Ein Vorteil ergibt sich insbesondere dann, wenn die Koppeleinheit rückwärtssperrfähige Schalter aufweist, die leitend ausgebildete Leistungsschalter sind. Aufgrund der Funktionsweise der rückwärtssperrfähigen Schalter würde bei gleichzeitiger Betätigung der Schalter der Pluspol des Niederspannungsteilnetzes während der Schaltphase mit dem höheren Potential der beiden Batterieeinheiten verbunden sein, und der Minuspol des Bordnetzes mit dem niedrigeren Potential der beiden Batterieeinheiten, was zu einer erhöhten Spannung führt. Durch die vorgeschlagene Schaltstrategie wird verhindert, dass kurzzeitig größere Spannungen an das Niederspannungsteilnetz bereitgestellt werden, als die Spezifikation des Niederspannungsteilnetzes erlaubt. Das vorteilhafte Umschaltkonzept verhindert außerdem ein kurzzeitiges Ansteigen der Niederspannung bei Umschaltvorgängen in der eingesetzten Koppeleinheit. In Verbindung mit einer Puffereinrichtung, die beispielsweise als Kondensator im Niederspannungsteilnetz ausgebildet ist, wird weiter vorteilhaft der Spannungseinbruch im Niederspannungsteilnetz limitiert.

Erfindungsgemäß wird außerdem ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei dem Computerprogramm kann es sich beispielsweise um ein Modul zur Implementierung einer Einrichtung zum Betrieb eines Bordnetzes oder um ein Modul zur Implementierung eines Batteriemanagementsystems eines Fahrzeugs handeln. Das Computerprogramm kann auf einem maschinenlesbaren Speichermedium gespeichert werden, etwa auf einem permanenten oder wiederbeschreibbaren Speichermedium, oder in Zuordnung zu einer Computereinrichtung, beispielsweise auf einem tragbaren Speicher, wie einer CD-ROM, DVD, Blu-ray Disk, einem USB-Stick oder einer Speicherkarte. Zusätzlich und alternativ dazu kann das Computerprogramm auf einer Computereinrichtung, wie etwa auf einem Server oder einem Cloud-Server, zum Herunterladen bereitgestellt werden, beispielsweise über ein Datennetzwerk, wie das Internet, oder eine Kommunikationsverbindung, wie etwa eine Telefonleitung oder eine drahtlose Verbindung.

Erfindungsgemäß wird außerdem ein Batteriemanagementsystem (BMS) bereitgestellt, welches Einrichtungen aufweist, um eines der beschriebenen Verfahren zum Betrieb eines der beschriebenen Bordnetze durchzuführen. Insbesondere weist das Batteriemanagementsystem eine Einheit auf, welche eingerichtet ist, den Ladezustand der Batterieeinheiten, und insbesondere die Batterieeinheit mit dem höchsten Ladezustand zu ermitteln, und eine Einheit, welche eingerichtet ist, die Koppeleinheit so anzusteuern, dass Batterieeinheiten dem Niederspannungsteilnetz selektiv zuschaltet werden, insbesondere diejenige mit dem höchsten Ladezustand.

Nach einer weiteren Ausführungsform umfasst das Batteriemanagementsystem eine weitere Einheit, welche eingerichtet ist, die Überschreitung eines Schwellwerts einer Ladungszustandsdifferenz der Batterieeinheiten zu ermitteln, um daraufhin mittels der Koppeleinheit einen Wechsel der zugeschalteten Batterieeinheit auszuführen.

Erfindungsgemäß wird außerdem ein Kraftfahrzeug angegeben, mit einem Verbrennungsmotor und einem zuvor beschriebenen Bordnetz.

Vorteile der Erfindung

Die Erfindung stellt ein kostengünstiges Bordnetz mit einem Lithium-Ionen-Batteriesystem für Fahrzeuge bereit, die ein Hochspannungsteilnetz, beispielsweise mit einem 48-Volt-Generator, und ein Niederspannungsteilnetz, beispielsweise mit einem 14-Volt-Starter, und ein Boost-Rekuperationssystem mit unidirektionaler Versorgung des Niederspannungsteilnetzes aufweisen. Hierbei kann gegenüber bekannten Systemen ein potentialtrennender DC/DC-Wandler entfallen, sowie die Blei-Säure-Batterie. Das Boost-Rekuperationssystem kann bei geeigneter Auslegung gegenüber aktuell in der Entwicklung befindlichen BRS-Systemen deutlich mehr Energie speichern und dadurch bei längeren Bremsvorgängen oder Bergabfahrten mehr elektrische Energie im System zurückgewinnen. Das System zeichnet sich außerdem durch ein geringes Volumen, ein geringes Gewicht und eine lange Lebensdauer aus. Aufgrund des mehrfach redundant ausgelegten Niederspannungsteilnetzes besteht eine höhere Verfügbarkeit des Systems, was hohe Leistungsanforderungen auch bei Kaltstartvorgängen ermöglicht.

Das vorgestellte erfindungsgemäße Verfahren umfasst eine Betriebsstrategie, welche die Versorgung des Niederspannungsteilnetzes ermöglicht und elektrische Energie bei Startvorgängen bereitstellt. Die Speicherung elektrischer Energie wird dabei so optimiert, dass möglichst viel elektrische Energie bei einem Bremsvorgang rückgewonnen werden kann und die Batterie dabei mit möglichst hohen Leistungen geladen werden kann. Außerdem wird die Speicherung elektrischer Energie bei Rekuperationsvorgängen erlaubt und möglichst viel elektrische Energie bei Boost-Vorgängen bereitgestellt. Kaltstartvorgänge und Start-/Stopp-Vorgänge sind mit hoher Leistung, erforderlichenfalls mit schneller Wiederholung durchführbar.

Kurze Beschreibung der Zeichnungen

Das Ausführungsbeispiel sowie Beispiele zum Verständnis der Erfindung sind in den Zeichnungen dargestellt und in der nachfolgenden Beschreibung näher erläutert. Es zeigen

Figur 1    ein Niederspannungsbordnetz nach dem Stand der Technik,

Figur 2    ein Bordnetz mit einem Hochspannungsteilnetz und einem Niederspannungsteilnetz und einem unidirektionalen, potentialtrennenden DC/DC-Wandler,

Figur 3    ein Bordnetz mit einem Hochspannungsteilnetz und einem Niederspannungsteilnetz und einem bidirektionalen, potentialtrennenden DC/DC-Wandler,

Figur 4    ein Bordnetz mit einem Hochspannungsteilnetz und einem Niederspannungsteilnetz und einem unidirektionalen, galvanisch nicht trennenden DC/DC-Wandler,

Figur 5    eine Koppeleinheit gemäß einer Ausführungsform der Erfindung,

Figur 6    die Koppeleinheit aus Figur 5 in einem beispielhaften Betriebszustand,

Figur 7    die Koppeleinheit aus Figur 5 während eines beispielhaften Umschaltvorgangs, und

Figur 8    rückwärtssperrfähige Schalter.

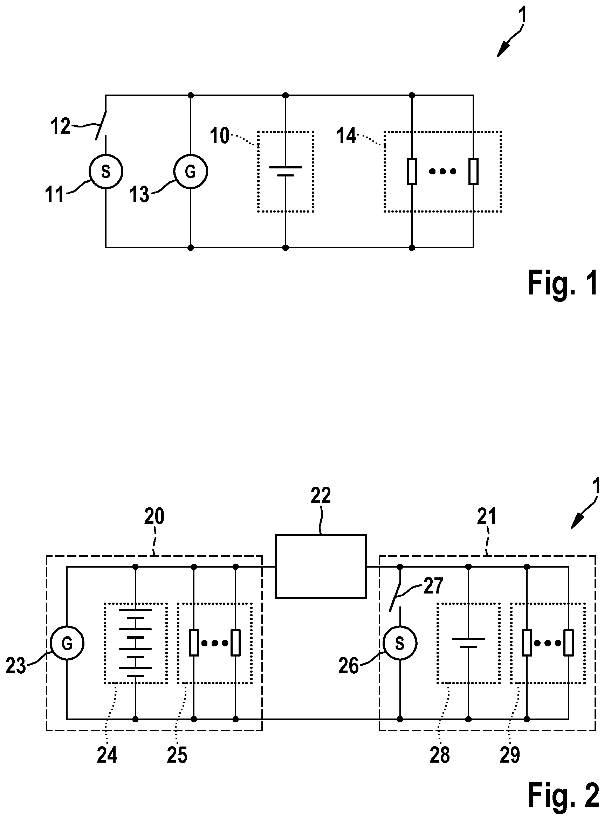

Figur 1 zeigt ein Bordnetz 1 nach dem Stand der Technik. Beim Starten eines Verbrennungsmotors wird über das Bordnetz 1 von einer Starterbatterie 10 eine Spannung einem Starter 11 zur Verfügung gestellt, welcher den Verbrennungsmotor (nicht dargestellt) startet, wenn beispielsweise durch ein entsprechendes Startersignal ein Schalter 12 geschlossen wird. Ist der Verbrennungsmotor gestartet, treibt dieser einen elektrischen Generator 13 an, welcher dann eine Spannung von etwa 12 Volt erzeugt und über das Bordnetz 1 den verschiedenen elektrischen Verbrauchern 14 im Fahrzeug zur Verfügung stellt. Der elektrische Generator 13 lädt dabei auch die durch den Startvorgang belastete Starterbatterie 10 wieder auf.

Figur 2 zeigt ein Bordnetz 1 mit einem Hochspannungsteilnetz 20 und einem Niederspannungsteilnetz 21 und einem unidirektionalen, potentialtrennenden DC/DC-Wandler 22, der eine Koppeleinheit zwischen dem Hochspannungsteilnetz 20 und dem Niederspannungsteilnetz 21 bildet. Das Bordnetz 1 kann ein Bordnetz eines Fahrzeugs, insbesondere eines Kraftfahrzeugs, Transportfahrzeugs oder Gabelstaplers, sein.

Das Hochspannungsteilnetz 20 ist beispielsweise ein 48-Volt-Bordnetz mit einem elektrischen Generator 23, welcher von einem Verbrennungsmotor (nicht dargestellt) betreibbar ist. Der Generator 23 ist in diesem Ausführungsbeispiel ausgebildet, in Abhängigkeit von einer Drehbewegung des Motors des Fahrzeugs eine elektrische Energie zu erzeugen und in das Hochspannungsteilnetz 20 einzuspeisen. Das Hochspannungsteilnetz 20 umfasst weiterhin eine Batterie 24, welche beispielsweise als eine Lithium-Ionen-Batterie ausgebildet sein kann und welche eingerichtet ist, die nötige Betriebsspannung dem Hochspannungsteilnetz auszugeben. Im Hochspannungsteilnetz 20 sind weitere Lastwiderstände 25 angeordnet, welche beispielsweise durch wenigstens einen, bevorzugt durch eine Mehrzahl von elektrischen Verbrauchern des Kraftfahrzeugs gebildet sein können, die mit der Hochspannung betrieben werden.

Im Niederspannungsteilnetz 21, welches ausgangsseitig an dem DC/DC-Wandler 22 angeordnet ist, befinden sich ein Starter 26, der eingerichtet ist, einen Schalter 27 zu schließen um den Verbrennungsmotor zu starten, sowie ein Energiespeicher 28, der eingerichtet ist, die Niederspannung in Höhe von beispielsweise 14 Volt für das Niederspannungsteilnetz 21 bereitzustellen. Im Niederspannungsteilnetz 21 sind weitere Verbraucher 29 angeordnet, die mit der Niederspannung betrieben werden. Der Energiespeicher 28 umfasst beispielsweise galvanische Zellen, insbesondere solche einer Blei-Säurebatterie, welche in vollgeladenem Zustand (*state of Charge*, SOC = 100%) üblicherweise eine Spannung von 12,8 Volt aufweist. Bei entladener Batterie (*state of Charge*, SOC = 0%) weist der Energiespeicher 28 unbelastet eine Klemmenspannung von typischerweise 10,8 Volt auf. Die Bordnetzspannung im Niederspannungsteilnetz 21 liegt im Fahrbetrieb, je nach Temperatur und Ladezustand des Energiespeichers 28, etwa im Bereich zwischen 10,8 Volt und 15 Volt.

Der DC/DC-Wandler 22 ist eingangsseitig mit dem Hochspannungsteilnetz 20 und mit dem Generator 23 verbunden. Der DC/DC-Wandler 22 ist ausgangsseitig mit dem Niederspannungsteilnetz 21 verbunden. Der DC/DC-Wandler 22 ist ausgebildet, eine eingangsseitig empfangene Gleichspannung, beispielsweise eine Gleichspannung, mit der das Hochspannungsteilnetz betrieben wird, beispielsweise zwischen 12 und 48 Volt, zu empfangen und eine Ausgangsspannung zu erzeugen, welche von der eingangsseitig empfangenen Spannung verschieden ist, insbesondere eine Ausgangsspannung zu erzeugen, welche kleiner ist als die eingangsseitig empfangene Spannung, beispielsweise 12 V oder 14 V.

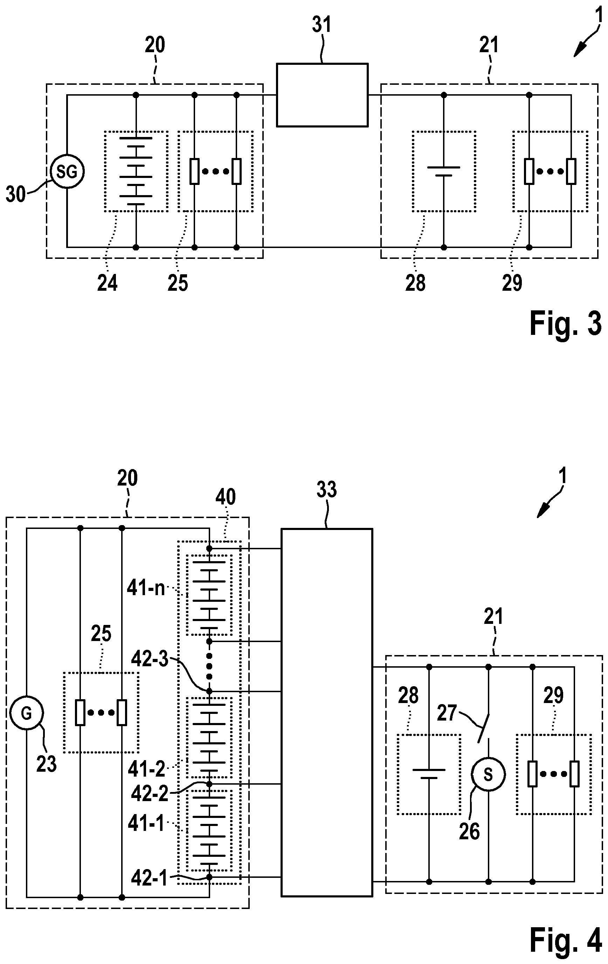

Figur 3 zeigt ein Bordnetz 1 mit einem Hochspannungsteilnetz 20 und einem Niederspannungsteilnetz 21, welche durch einen bidirektionalen, potentialtrennenden DC/DC-Wandler 31 verbunden sind. Das dargestellte Bordnetz 1 ist im Wesentlichen wie das in Figur 2 dargestellte Bordnetz ausgebildet, wobei der Generator im Hochspannungsteilnetz eingebunden ist und für den Energietransfer zwischen den Teilbordnetzen 20, 21 ein DC/DC-Wandler 31 zum Einsatz kommt, der potentialtrennend ausgeführt ist. In beiden Teilnetzen 20, 21 sind außerdem Batterien 24, 28 und Verbraucher 25, 29 angeordnet, wie mit Bezug zu Figur 2 beschrieben. Im Wesentlichen unterscheidet sich das in Figur 3 dargestellte System durch die Einbindung des Starters. Während in dem in Figur 2 dargestellten System der Starter 26 im Niederspannungsteilnetz 21 angeordnet ist und hierdurch der DC/DC-Wandler 22 unidirektional für einen Energietransport vom Hochspannungsteilnetz 20 in das Niederspannungsteilnetz 21 ausgelegt sein kann, wird bei der in Figur 3 dargestellten Architektur ein Starter-Generator 30 im Hochspannungsteilnetz 20 eingesetzt. In diesem Fall ist der DC/DC-Wandler 31 bidirektional ausgeführt, sodass die Lithium-Ionen-Batterie 24 ggf. über das Niederspannungsteilnetz 21 geladen werden kann. Die Starthilfe des Niederspannungsfahrzeugs erfolgt dann über die Niederspannungsschnittstelle und den DC/DC-Wandler 31.

Figur 4 zeigt ein Bordnetz 1 mit einem Hochspannungsteilnetz 20 und einem Niederspannungsteilnetz 21, beispielsweise ein Bordnetz 1 eines Fahrzeugs, insbesondere eines Kraftfahrzeugs, Transportfahrzeugs oder Gabelstaplers. Das Bordnetz 1 eignet sich insbesondere für den Einsatz bei Fahrzeugen mit einem 48-Volt-Generator, einem 14-Volt-Starter und einem Boost-Rekuperationssystem.

Das Hochspannungsteilnetz 20 umfasst einen Generator 23, welcher von einem Verbrennungsmotor (nicht dargestellt) betreibbar ist. Der Generator 23 ist ausgebildet, in Abhängigkeit von einer Drehbewegung des Motors des Fahrzeugs elektrische Energie zu erzeugen und in das Hochspannungsteilnetz 20 einzuspeisen. Im Hochspannungsteilnetz 20 sind Lastwiderstände 25 angeordnet, welche beispielsweise durch wenigstens einen, bevorzugt durch eine Mehrzahl von elektrischen Verbrauchern des Kraftfahrzeugs gebildet sein können, die mit der Hochspannung betrieben werden.

Das Hochspannungsteilnetz 20 umfasst außerdem eine Batterie 40, welche beispielsweise als eine Lithium-Ionen-Batterie ausgebildet sein kann und welche eingerichtet ist, die Betriebsspannung von 48 Volt dem Hochspannungsteilnetz auszugeben. Die Lithium-Ionen-Batterie 40 weist bei einer Nennspannung von 48 Volt bevorzugt eine Mindestkapazität von ca. 15 Ah auf, um die erforderliche elektrische Energie speichern zu können.

Die Batterie 40 weist mehrere Batterieeinheiten 41-1, 41-2, ...41-n auf, wobei den Batterieeinheiten 41 mehrere Batteriezellen zugeordnet sind, welche üblicherweise in Serie und teilweise zusätzlich parallel zueinander geschaltet werden, um die geforderten Leistungs- und Energiedaten mit der Batterie 40 zu erzielen. Die einzelnen Batteriezellen sind beispielsweise Lithium-Ionen-Batterien mit einem Spannungsbereich von 2,8 bis 4,2 Volt.

Den Batterieeinheiten 41-1, 41-2, ...41-n sind Einzelspannungsabgriffe 42-1, 42-2, ...42-n+1 zugeordnet, über welche die Spannung einer Koppeleinheit 33 zugeführt wird. Bei einer Serienschaltung der Batterieeinheiten 41-1, 41-2, ...41-n, wie in Figur 4 dargestellt, sind die Einzelspannungsabgriffe 42 zwischen den Batterieeinheiten 41 angeordnet, sowie an den Enden der Batterie 40 jeweils einer. Bei einer Anzahl von n Batterieeinheiten ergeben sich hierdurch n+1 Abgriffe 42. Durch die zusätzlichen Einzelspannungsabgriffe 42 ist die Lithium-Ionen-Batterie 40 in mehrere Batterieeinheiten 41-1, 41-2, ...41-n unterteilt, welche im Rahmen der Erfindung auch als Teilbatterien bezeichnet werden können. Die Einzelspannungsabgriffe 42 sind so gewählt, dass die Batterieeinheiten 41 jeweils eine Spannungslage aufweisen, mit der das Niederspannungsteilnetz 21, d.h. das 14-Volt-Bordnetz, versorgt werden kann. Die Einzelspannungsabgriffe 42 der Batterieeinheiten 41 werden, wie in Figur 4 dargestellt, der Koppeleinheit 33 zugeführt. Die Koppeleinheit 33 hat die Aufgabe, zumindest eine der Batterieeinheiten 41 der Batterie 40 auf das Niederspannungsteilnetz 21 zu dessen Betrieb oder Unterstützung durchzuschalten.

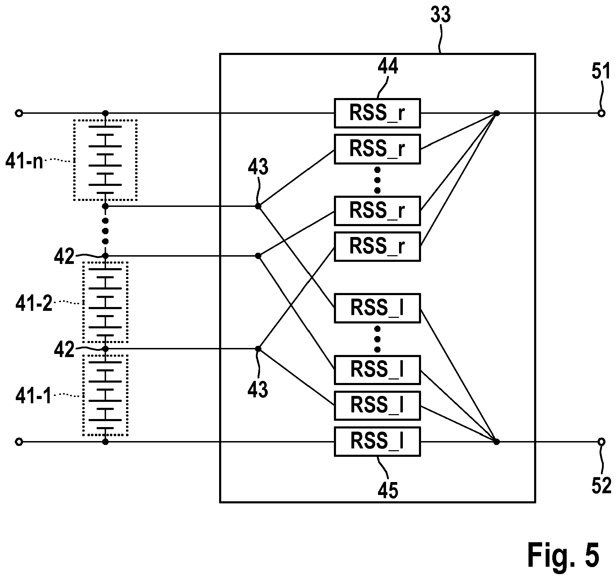

Die Koppeleinheit 33 koppelt das Hochspannungsteilnetz 20 mit dem Niederspannungsteilnetz 21 und stellt ausgangsseitig dem Niederspannungsteilnetz 21 die nötige Betriebsspannung bereit, beispielsweise 12 V oder 14 V. Der Aufbau und die Funktionsweise der Koppeleinheit 33 werden mit Bezug zu den Figuren 5 bis 7 beschrieben.

Das Niederspannungsteilnetz 21 umfasst die Niederspannungsverbraucher 29, welche beispielsweise für einen Betrieb bei 14 V Spannung ausgelegt sind. Das Niederspannungsteilnetz 21 weist auch den Starter 26 auf, welcher eingerichtet ist, den Schalter 27 zu betätigen, um den Verbrennungsmotor zu starten.

Zur Versorgung des Starters im Niederspannungsteilnetz, speziell etwa bei einem Kaltstart des Fahrzeugs, ist im Niederspannungsteilnetz 21 ein weiterer Energiespeicher 28 verfügbar. Der Energiespeicher 28, beispielsweise eine Batterie, kann kurzzeitig sehr hohe Ströme liefern und entlastet die Lithium-Ionen-Batterie 40 in den Startphasen. Speziell die Auswirkungen der bekannten Schwäche von Lithium-Ionen-Batterien, dass sie keine hohen Ströme bei tiefen Temperaturen abgeben können, sind durch den Einsatz des Energiespeichers 28 in dem in Figur 4 dargestellten System gemindert. Für den Fall, dass der Energiespeicher 28 als ein Doppelschichtkondensator ausgeführt ist, können die Startströme auch in hoher Gesamtanzahl über die gesamte Lebensdauer der Batterie und auch bei einzelnen Startvorgängen ggf. auch mehrfach hintereinander, d.h. bei erfolglosem Startversuch, nach erfolgtem Wiederaufladen des Leistungsspeichers erfolgen. Auf diese Weise kann ein System realisiert werden, das sehr hohe Verfügbarkeit elektrischer Energie im Niederspannungsteilnetz 21 aufweist und kurzzeitig sehr hohe Leistung abgeben kann, d. h. auf Hochleistung optimiert ist. Der Hochleistungsspeicher 28 erfüllt außerdem den Zweck, dass Überspannungen bei einem Umschalten der Batterieeinheiten 41 vermieden werden. Wird als Energiespeicher 28 ein Kondensator eingesetzt, so ist dessen Dimensionierung bevorzugt:

$$C = \frac{I_{\max} \cdot t_{umschalt}}{\Delta U_{\max}},$$

wobei $I_{\max}$ der maximale Bordnetzstrom ist, der während der Umschaltvorgänge im Bordnetz fließen kann, $t_{umschalt}$ die Zeitdauer, während welcher keine Batterieeinheit 41 für die Versorgung bereit steht, und $\Delta U_{\max}$ die maximal zulässige Veränderung der Bordnetzspannung während des Umschaltvorgangs.

Nach einer Ausführungsform ist vorgesehen, dass die Lithium-Ionen-Batterie 40 die Versorgung von Ruhestromverbrauchern, welche als Verbraucher 25, 29 dargestellt sind, bei abgestelltem Fahrzeug übernimmt. Beispielsweise kann vorgesehen sein, dass hierbei die Anforderungen des so genannten Flughafentests erfüllt werden, wobei nach sechs Wochen Standzeit das Fahrzeug noch startbar ist und wobei die Batterie während der Standzeit die Ruheströme der Niederspannungsverbraucher 29 im Niederspannungsteilnetz 21 bereitstellt, damit beispielsweise eine Diebstahlwarnanlage versorgt wird.

Das in Figur 4 dargestellte Bordnetz kann weiterhin ein Batteriemanagementsystem (BMS) umfassen (nicht dargestellt). Das Batteriemanagementsystem umfasst ein Steuergerät, welches eingerichtet ist, Messdaten über Temperaturen, bereitgestellte Spannungen, abgegebene Ströme und Ladungszustände der Batterie 40 bzw. der Batterieeinheiten 41 zu erfassen, zu verarbeiten und hieraus beispielsweise Aussagen über den Gesundheitszustand der Batterie 40 zu treffen. Das Batteriemanagementsystem umfasst dabei eine Einheit, welche eingerichtet ist, die Koppeleinheit 33 so zu regeln, dass diese die Batterieeinheiten 41 selektiv im Niederspannungsteilnetz 21 zuschalten kann.

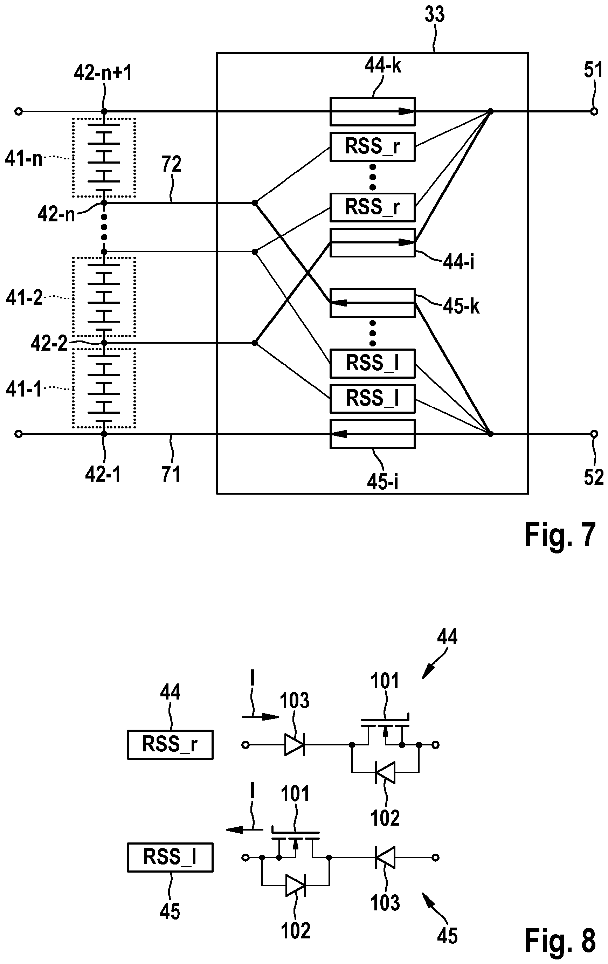

Figur 5 zeigt eine Koppeleinheit 33, die als unidirektionaler, galvanisch nicht trennender Gleichspannungswandler (DC/DC-Wandler) ausgeführt ist. Die Koppeleinheit 33 umfasst rückwärtssperrfähige Schalter 44, 45, welche die Eigenschaft aufweisen, dass sie in einem Zustand "ein" einen Stromfluss nur in eine Richtung ermöglichen und in einem zweiten Zustand "aus" eine Sperrspannung beiderlei Polarität aufnehmen können. Dies ist ein wesentlicher Unterschied zu einfachen Halbleiterschaltern, wie z.B. IGBT-Schaltern, da diese in Rückwärtsrichtung aufgrund ihrer intrinsischen Diode keine Sperrspannung aufnehmen können. Aufgrund der Abhängigkeit von der Stromflussrichtung sind in Figur 5 zwei verschiedene Schaltertypen eingezeichnet, nämlich RSS_l 45 und RSS_r 44, die sich in ihrer Fertigung nicht unterscheiden, sondern lediglich mit unterschiedlicher Polarität verbaut sind. Ein Beispiel für den näheren Aufbau der rückwärtssperrfähigen Schalter 44, 45 wird mit Bezug zu Figur 8 beschrieben.

In der Koppeleinheit 33 werden die Einzelspannungsabgriffe 42 der Batterieeinheiten 41 jeweils an Verzweigungspunkten 43 verzweigt und jeweils einem der unterschiedlichen rückwärtssperrfähigen Schalter RSS_l 45 und RSS_r 44 zugeführt. Die rückwärtssperrfähigen Schalter RSS_l 45 werden ausgangsseitig der Koppeleinheit 33 mit dem Pluspol 52 verschaltet, und die rückwärtssperrfähigen Schalter RSS_r 44 werden ausgangsseitig der Koppeleinheit 33 auf den Minuspol 51 geschaltet.

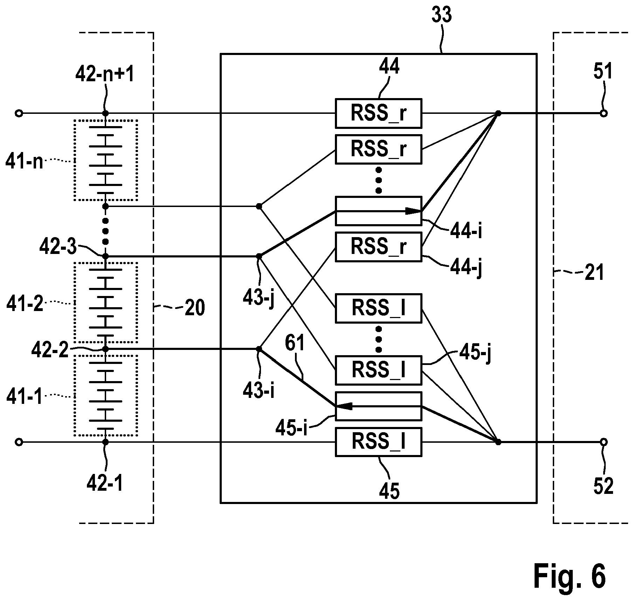

Figur 6 zeigt die Versorgung des Niederspannungsteilnetzes 21 beispielhaft aus der Batterieeinheit 41-2 über die zugeordneten Abgriffe 42-2 und 42-3. Vom Pluspol 52 führt der Strompfad 61 über einen rückwärtssperrfähigen Schalter RSS_l 45-i über einen Verzweigungspunkt 43-i über den Spannungsabgriff 42-2 zur durchgeschalteten Batterieeinheit 41-2, und von dort aus über den nach der durchgeschalteten Batterieeinheit 41-2 angeordneten Spannungsabgriff 42-3 über den Verzweigungspunkt 43-j über einen weiteren rückwärtssperrfähigen Schalter RSS_r 44-i zum Minuspol 51. Am ersten Verzweigungspunkt 43-i führt auch eine Verbindung zu einem weiteren rückwärtssperrfähigen Schalter RSS_r 44-j. Da dieser rückwärtssperrfähig ausgebildet ist, kann hier aber kein Strom fließen. Im Falle eines gewöhnlichen MOSFET-Schalters wäre dieser rückwärts durchleitend, sodass der Strompfad nicht über die Batterieeinheit 41-2 führen würde, sondern über den Schalter RSS_r 44-j. Gleiches gilt für den zweiten Verzweigungspunkt 43-j, welcher wiederum zu einem sperrenden rückwärtssperrfähigen Schalter RSS_I 45-j führt, sodass hier ebenfalls kein Stromfluss möglich ist.

Die Spannungslage des Hochspannungsteilnetzes 20 bezogen auf die Masse des Niederspannungsteilnetzes 21 hängt davon ab, welche der Batterieeinheiten 41 zugeschaltet ist. In keinem der Betriebszustände weist eines der Potentiale jedoch einen Betrag auf, der eine Spannungsgrenze in Höhe der Summe der Hochspannung und der Niederspannung überschreitet, d.h. bei einem 48-Volt-Netz und einem 14-Volt-Netz in etwa 62 Volt. Es können jedoch negative Potentiale gegenüber der Masse des Niederspannungsteilnetzes auftreten.

Der Betrieb des Hochspannungsgenerators 23 ist unabhängig von dem Betrieb der Koppeleinheit 33 und der Versorgung des Niederspannungsteilnetzes. In der durchgeschalteten Batterieeinheit 41, die das Niederspannungsteilnetz 21 versorgt, ergibt sich eine Überlagerung durch den Niederspannungsteilnetzstrom und den ggf. vom Generator 23 in die gesamte Lithium-Ionen-Batterie 40 eingespeisten Ladestrom (Generatorbetrieb) bzw. durch den der gesamten Lithium-Ionen-Batterie 40 entnommenen Entladestrom (Motorbetrieb). Solange die zulässigen Grenzen der Batteriezellen, z.B. der maximal zulässige Entladestrom der Zellen, nicht überschritten werden, können diese Vorgänge unabhängig voneinander betrachtet werden. Damit das Niederspannungsteilnetz 21 sicher versorgt wird, wird genau eine der Batterieeinheiten 41 über die zugehörigen Schalter 44, 45 der Koppeleinrichtung 33 zugeschaltet. Aufgrund der mehrfach redundanten Versorgung des Niederspannungsteilnetzes 21 kann mit der vorgestellten Architektur ein System aufgebaut werden, welches eine sehr hohe Verfügbarkeit der elektrischen Energie im Niederspannungsteilnetz aufweist.

Figur 7 zeigt einen Umschaltvorgang mittels der Koppeleinheit 33 beispielhaft von der Batterieeinheit 41-1 auf die Batterieeinheit 41-n. Vor dem Umschalten führt ein erster Strompfad 71 über einen ersten rückwärtssperrfähigen Schalter RSS_I 45-i, über erste Spannungsabgriffe 42-1, 42-2, die der ersten Batterieeinheit 41-1 zugeordnet sind, und über einen zweiten rückwärtssperrfähigen Schalter RSS_r 44-i zum Minuspol 51. Nach dem Umschalten führt der Strompfad 72 über einen zweiten rückwärtssperrfähigen Schalter RSS_I 45-k, über

Spannungsabgriffe 42-n, 42-n+1, welche der n-ten Batterieeinheit 41-n zugeordnet sind, und über einen weiteren rückwärtssperrfähigen Schalter RSS_r 44-k zum Minuspol 51.

Zum Wechsel werden die rückwärtssperrfähigen Schalter 45-i, 44-i ausgeschaltet und die anderen rückwärtssperrfähigen Schalter 45-k, 44-k eingeschaltet. Würde die Koppeleinheit 33 die Schaltbefehle für die Schalter 45-i, 44-i, 45-k, 44-k synchron bekommen, so würde aufgrund der Funktionsweise der rückwärtssperrfähigen Schalter der Pluspol 52 des Niederspannungsteilnetzes während der Schaltphase der Leistungsschalter mit dem höheren Potential der beiden Teilbatterien verbunden und der Minuspol 51 während der Schaltphase mit dem niedrigeren Potential der beiden Teilbatterien, d.h. in dem Beispiel mit dem Minuspol der Batterieeinheit 41-n. Damit würde kurzfristig eine wesentlich größere Spannung an das Niederspannungsteilnetz angelegt, als die Spezifikation des Niederspannungsteilnetzes erlaubt. Im dargestellten Beispiel in Figur 6 würde dem Niederspannungsteilnetz 21 wegen der in Serie geschalteten Batterieeinheiten 41 kurzfristig die Summe der Teilspannungen der Gesamtbatterie bereitgestellt werden. Um diese Überspannungen zu vermeiden, wird bei dem Umschalten der Koppeleinheit 33 wie folgt vorgegangen:

- Die Umschaltung erfolgt so, dass die Schalter der aktuell Strom führenden Teilbatterie, im dargestellten Beispiel die Batterieeinheit 41-1, zuerst abgeschaltet werden und nachdem die Schalter der bisher Strom führenden Teilbatterie keinen Strom mehr führen, werden die Schalter der Teilbatterie, welche die Versorgung des Niederspannungsteilnetzes übernehmen sollen, eingeschaltet. Das beschriebene Prinzip wird auch als *"Break-before-Make"* bezeichnet.

Bei Betrachtung einer optimierten Betriebsstrategie für das Bordnetz 1 mit der dargestellten Serienschaltung der Batterieeinheiten 41 werden folgende Erwägungen angestellt. Dabei wird davon ausgegangen, dass bei gleichmäßig gealterten Zellen der Innenwiderstand und die Kapazität der Zellen bei gleichen Referenzbedingungen, d. h. im Wesentlichen gleicher Temperatur und gleichem Ladezustand, annähernd gleich sind.

Die maximal abgebbare Leistung wird bei gleichmäßig gealterten Zellen durch diejenige Zelle mit dem geringsten Ladezustand begrenzt.

Die maximal entnehmbare Energie wird bei gleichmäßig gealterten Zellen durch die Zelle mit dem geringsten Ladezustand begrenzt.

Die maximal zulässige Leistung bei Ladevorgängen wird bei gleichmäßig gealterten Zellen durch die Zelle mit dem höchsten Ladezustand begrenzt.

Die maximal zuführbare Energie wird bei gleichmäßig gealterten Zellen durch die Zelle mit dem höchsten Ladezustand begrenzt.

Da das Batteriesystem in einem Boost-Rekuperationssystem in der Lage sein soll, jederzeit möglichst viel Energie bei einem Bremsvorgang speichern zu können, und gleichzeitig in der Lage sein soll, einen Boost-Vorgang möglichst gut zu unterstützen, kann daraus die Anforderung abgeleitet werden, dass die Batterieeinheiten 41 und die darin befindlichen Zellen alle möglichst den gleichen Ladezustand aufweisen müssen, um die gestellten Anforderungen möglichst gut zu erfüllen.

Zusätzlich zu den Anforderungen für das Hochspannungsteilnetz 20 sind an das System auch Anforderungen für die Startvorgänge im Niederspannungsteilnetz 21 gestellt. Damit diese Anforderungen mittels Kombination aus dem Hochleistungsenergiespeicher 28 und der Lithium-Ionen-Batterie 40 möglichst gut erfüllt werden, wird bevorzugt diejenige Batterieeinheit 41 zur Versorgung des Niederspannungsteilnetzes eingesetzt, die zu einem gegebenen Zeitpunkt den höchsten Ladezustand aufweist.

Die Anforderungen an die Auswahl der Schaltzustände der Koppeleinheit 33 können mit folgender Betriebsstrategie erfüllt werden: Die Versorgung des Niederspannungsteilnetzes 21 erfolgt immer aus derjenigen Teilbatterie 41, die aktuell den höchsten Ladezustand aufweist. Da die Versorgung des Niederspannungsteilnetzes zu den Lade- und Entladevorgängen im Hochspannungsteilnetz überlagert ist und die Niederspannungsteilnetzversorgung unidirektional stattfindet, wird durch diese Auswahlvorschrift sichergestellt, dass die Teilbatterie 41 mit dem höchsten Ladezustand schneller entladen wird bzw. langsamer geladen wird als die anderen Batterieeinheiten 41. Dies hat eine Symmetrisierung der Ladezustände der Teilbatterien zur Folge.

Damit sich bei gleichem Ladezustand der Batterieeinheiten 41 nicht ein sehr schneller Wechsel von einer Batterieeinheit 41 auf die nächste einstellt, wird ein Schwellwert für die Differenz $\Delta SOC_{umschalt}$ der Ladezustände eingeführt, z.B. eine Differenz $\Delta SOC_{umschalt}$ mit einem definierten Wert zwischen 0,5% und 20%, bevorzugt zwischen 1% und 5%, besonders bevorzugt etwa 2%, die überschritten werden muss, damit die Versorgung des Niederspannungsteilnetzes 21 von einer Batterieeinheit 41 auf diejenige Batterieeinheit 41 wechselt, die einen entsprechend höheren Ladezustand aufweist, als die aktuell zur Versorgung des Niederspannungsteilnetzes 21 genutzte Batterieeinheit 41. Die Umschaltung bei der Versorgung erfolgt immer auf diejenige Batterieeinheit 41, die aktuell den höchsten Ladezustand aufweist, und die Umschaltung erfolgt dann, wenn die aktuell zur Versorgung des Niederspannungsteilnetzes 21 durchgeschaltete Batterieeinheit 41 einen Ladezustand aufweist, der um mindestens $\Delta SOC_{umschalt}$ geringer ist als der Ladezustand jener Batterieeinheit 41 mit dem höchsten Ladezustand.

Figur 8 zeigt einen möglichen Aufbau von rückwärtssperrfähigen Schaltern 44, 45. Die Durchlassrichtung ist dabei mit I angegeben. Ein rückwärtssperrfähiger Schalter RSS_r 44 umfasst beispielsweise einen IGBT, MOSFET oder Bipolartransistor 101 und eine in Serie dazu geschaltete Diode 103. In Figur 8 ist ein MOSFET 101 dargestellt, welcher eine mit dargestellte, intrinsische Diode 102 aufweist. Die zu dem MOSFET 101 in Serie geschaltete Diode 103 ist entgegen der Richtung der intrinsischen Diode 102 des MOSFET 101 gepolt. Der rückwärtssperrfähige Schalter RSS_r 44 lässt den Strom in Durchlassrichtung I durch und sperrt in entgegengesetzter Richtung. Der rückwärtssperrfähige Schalter RSS_l 45 entspricht dem RSS_r 44, wird lediglich mit der umgekehrten Polarität verbaut, so dass die Durchlass- und Sperrrichtungen vertauscht sind. Die Schalter RSS_l 45, RSS_r 44 zeichnen sich insbesondere auch durch eine kaum merkliche Verzögerung bei den Schaltvorgängen aus, d. h. erlauben eine sehr kurze Umschaltdauer. Über eine geeignete Ansteuerschaltung kann die Zeitverzögerung zwischen dem Ausschalten und dem Einschalten der Schalter sehr genau eingestellt werden.

Die Erfindung ist durch die Ansprüche definiert.

**Patentansprüche**

1. Bordnetz (1) für ein Kraftfahrzeug, mit einem Niederspannungsteilnetz (21) für zumindest einen Niederspannungsverbraucher (29) und mit einem Hochspannungsteilnetz (20) für zumindest einen Hochspannungsverbraucher (25) und einen elektrischen Generator (23), wobei das Hochspannungsteilnetz (20) mit dem Niederspannungsteilnetz (21) über eine Koppeleinheit (33) verbunden ist, welche eingerichtet ist, dem Hochspannungsteilnetz (20) Energie zu entnehmen und dem Niederspannungsteilnetz (21) zuzuführen, wobei das Hochspannungsteilnetz (20) eine Batterie (40) aufweist, die eingerichtet ist, die Hochspannung zu erzeugen und an das Hochspannungsteilnetz (20) auszugeben und die zumindest zwei Batterieeinheiten (41) mit Einzelspannungsabgriffen (42) aufweist, die an die Koppeleinheit (33) geführt sind, die Koppeleinheit (33) eingerichtet ist, die Batterieeinheiten (41) dem Niederspannungsteilnetz (21) selektiv zuzuschalten, und dass das Niederspannungsteilnetz (21) zumindest einen weiteren Energiespeicher (28) aufweist, welcher eingerichtet ist, die Niederspannung zu erzeugen und an das Niederspannungsteilnetz (21) auszugeben, **dadurch gekennzeichnet, dass** ein Umschaltvorgang zu solchen Zeitpunkten erfolgt, bei denen ein Bordnetzstrom möglichst gering ist und eine Synchronisierung mit einem Verbrauchermanagementsystem erfolgt, um Hochleistungsverbraucher kurzzeitig abzuschalten, um den Umschaltvorgang ohne einen nennenswerten Spannungseinbruch zu ermöglichen.

2. Bordnetz (1) nach Anspruch 1, **dadurch gekennzeichnet, dass** die selektiv zuschaltbaren Batterieeinheiten (41) jeweils zur Bereitstellung der Niederspannung ausgelegt sind.

3. Bordnetz (1) nach einem der vorhergehenden Ansprüche, **dadurch gekennzeichnet, dass** die Koppeleinheit (33) rückwärtssperrfähige Schalter (44, 45) aufweist.

4. Bordnetz (1) nach einem der vorhergehenden Ansprüche, **dadurch gekennzeichnet, dass** das Niederspannungsteilnetz (21) einen Starter (26) aufweist.

5. Verfahren zum Betrieb eines Bordnetzes (1) für ein Kraftfahrzeug, wobei das Bordnetz (1) ein Niederspannungsteilnetz (21) für zumindest einen Niederspannungsverbraucher (29) und ein Hochspannungsteilnetz (20) für zumindest einen Hochspannungsverbraucher (25) und einen elektrischen Generator (23) aufweist, wobei das Hochspannungsteilnetz (20) mit dem Niederspannungsteilnetz (21) über eine Koppeleinheit (33) verbunden ist, welche eingerichtet ist, dem Hochspannungsteilnetz (20) Energie zu entnehmen und dem Niederspannungsteilnetz (21) zuzuführen, wobei das Hochspannungsteilnetz (20) eine Batterie (40) aufweist, die eingerichtet ist, die Hochspannung zu erzeugen und an das Hochspannungsteilnetz (20) auszugeben, und die zumindest zwei Batterieeinheiten (41) mit Einzelspannungsabgriffen (42) aufweist, die an die Koppeleinheit (33) geführt sind, wobei die Koppeleinheit (33) eingerichtet ist, die Batterieeinheiten (41) dem Niederspannungsteilnetz (21) selektiv zuzuschalten,
wobei das Niederspannungsteilnetz (21) zumindest einen weiteren Energiespeicher (28) aufweist, welcher eingerichtet ist, die Niederspannung zu erzeugen und an das Niederspannungsteilnetz (21) auszugeben,
**dadurch gekennzeichnet, dass** diejenige Batterieeinheit (41) dem Niederspannungsteilnetz (21) zugeschaltet wird, welche den höchsten Ladezustand aufweist, wobei ein Wechsel der zugeschalteten Batterieeinheit (41) zu solchen Zeitpunkten erfolgt, bei denen ein Bordnetzstrom möglichst gering ist und eine Synchronisierung mit einem Verbrauchermanagementsystem erfolgt, um Hochleistungsverbraucher kurzzeitig abzuschalten, um den Umschaltvorgang ohne einen nennenswerten Spannungseinbruch zu ermöglichen, indem in einem ersten Schritt eine Strom führende Batterieeinheit (41) abgeschaltet wird, und hiernach in einem zweiten Schritt eine ausgewählte weitere Batterieeinheit (41) zugeschaltet wird, und wobei die Niederspannung bei einem Wechsel der zugeschalteten Batterieeinheit (41) von dem Energiespeicher (28) stabilisiert wird.

6. Verfahren nach Anspruch 5, **dadurch gekenn-**

**zeichnet, dass** ein Wechsel der zugeschalteten Batterieeinheit (41) bei einer Überschreitung eines Schwellwerts einer Ladezustandsdifferenz der Batterieeinheiten (41) erfolgt.

7. Batteriemanagementsystem zur Durchführung eines der Verfahren nach einem der Ansprüche 5 bis 6, mit einer Einheit zur Ermittlung des Ladezustands von Batterieeinheiten (41) und mit einer Einheit zur Steuerung einer Koppeleinheit (33) zur selektiven Zuschaltung von Batterieeinheiten (41) anhand von ermittelten Ladezuständen der Batterieeinheiten (41).

8. Computerprogramm, eingerichtet zur Durchführung eines der Verfahren nach einem der Ansprüche 5 bis 7, wenn das Computerprogramm auf einer programmierbaren Computereinrichtung ausgeführt ist.

9. Kraftfahrzeug mit einem Verbrennungsmotor und einem Bordnetz (1) nach einem der Ansprüche 1 bis 4.

**Claims**

1. Onboard electrical system (1) for a motor vehicle, having a low voltage subsystem (21) for at least one low voltage load (29) and having a high voltage subsystem (20) for at least one high voltage load (25) and an electrical generator (23), wherein the high voltage subsystem (20) is connected to the low voltage subsystem (21) by means of a coupling unit (33) that is set up to draw power from the high voltage subsystem (20) and to supply it to the low voltage subsystem (21), wherein the high voltage subsystem (20) has a battery (40) that is set up to produce the high voltage and to output it to the high voltage subsystem (20) and that has at least two battery units (41) having individual voltage taps (42) that are routed to the coupling unit (33), the coupling unit (33) is set up to selectively connect the battery units (41) to the low voltage subsystem (21), and that the low voltage subsystem (21) has at least one further energy store (28) that is set up to produce the low voltage and to output it to the low voltage subsystem (21), **characterized in that** a changeover process takes place at times at which an onboard electrical system current is as low as possible and synchronization with a load management system takes place in order to briefly disconnect high-power loads in order to allow the changeover process without a significant voltage dip.

2. Onboard electrical system (1) according to Claim 1, **characterized in that** the selectively connectable battery units (41) are each designed to provide the low voltage.

**3.** Onboard electrical system (1) according to either of the preceding claims, **characterized in that** the coupling unit (33) has switches with reverse blocking capability (44, 45).

**4.** Onboard electrical system (1) according to one of the preceding claims, **characterized in that** the low voltage subsystem (21) has a starter (26).

**5.** Method for operating an onboard electrical system (1) for a motor vehicle, wherein the onboard electrical system (1) has a low voltage subsystem (21) for at least one low voltage load (29) and a high voltage subsystem (20) for at least one high voltage load (25) and an electrical generator (23), wherein the high voltage subsystem (20) is connected to the low voltage subsystem (21) by means of a coupling unit (33) that is set up to draw power from the high voltage subsystem (20) and to supply it to the low voltage subsystem (21), wherein the high voltage subsystem (20) has a battery (40) that is set up to produce the high voltage and to output it to the high voltage subsystem (20), and that has at least two battery units (41) having individual voltage taps (42) that are routed to the coupling unit (33), wherein the coupling unit (33) is set up to selectively connect the battery units (41) to the low voltage subsystem (21), wherein the low voltage subsystem (21) has at least one further energy store (28) that is set up to produce the low voltage and to output it to the low voltage subsystem (21), **characterized in that** that battery unit (41) that has the highest state of charge is connected to the low voltage subsystem (21) wherein, a change of the connected battery unit (41) takes place at times at which an onboard electrical system current is as low as possible and synchronization with a load management system takes place in order to briefly disconnect high-power loads in order to allow the changeover process without a significant voltage dip, by virtue of a current-carrying battery unit (41) being disconnected in a first step, and, thereafter, a selected further battery unit (41) being connected in a second step, and wherein the low voltage is stabilized by the energy store (28) on a change of the connected battery unit (41).

**6.** Method according to Claim 5, **characterized in that** a change of the connected battery unit (41) takes place when a threshold value for a state of charge difference in the battery units (41) is exceeded.

**7.** Battery management system for performing one of the methods according to one of Claims 5 to 6, having a unit for ascertaining the state of charge of battery units (41) and having a unit for controlling a coupling unit (33) to selectively connect battery units (41) on the basis of ascertained states of charge of the battery units (41).

**8.** Computer program, set up to perform one of the methods according to one of Claims 5 to 7 when the computer program is executed on a programmable computer device.

**9.** Motor vehicle having an internal combustion engine and an onboard electrical system (1) according to one of Claims 1 to 4.

## Revendications

**1.** Réseau de bord (1) destiné à un véhicule automobile, le réseau de bord comprenant un sous-réseau à basse tension (21), destiné à au moins un consommateur à basse tension (29), et un sous-réseau à haute tension (20), destiné à au moins un consommateur à haute tension (25), et un générateur électrique (23), le sous-réseau à haute tension (20) étant relié au sous-réseau à basse tension (21) par le biais d'une unité de couplage (33) qui est conçue pour prendre de l'énergie au sous-réseau à haute tension (20) et l'acheminer au sous-réseau à basse tension (21), le sous-réseau à haute tension (20) comprenant une batterie (40) qui est conçue pour générer la haute tension et la délivrer au sous-réseau à haute tension (20) et qui comprend au moins deux unités de batterie (41) munies de prises de tension simples (42) qui sont amenées à l'unité de couplage (33), l'unité de couplage (33) étant conçue pour connecter sélectivement les unités de batterie (41) au sous-réseau à basse tension (21), et le sous-réseau à basse tension (21) comprenant au moins un autre accumulateur d'énergie (28) qui est conçu pour générer la basse tension et la délivrer au sous-réseau à basse tension (21), **caractérisé en ce qu'**un processus de commutation est effectué à des instants où le courant du réseau de bord est le plus faible possible et une synchronisation avec un système de gestion de consommation est effectuée pour déconnecter brièvement les consommateurs de forte puissance afin de permettre le processus de commutation sans baisse de tension significative.

**2.** Réseau de bord (1) selon la revendication 1, **caractérisé en ce que** les unités de batterie (41) connectables sélectivement sont chacune conçues pour produire la basse tension.

**3.** Réseau de bord (1) selon l'une des revendications précédentes, **caractérisé en ce que** l'unité de couplage (33) comprend des commutateurs (44, 45) blocables en inverse.

**4.** Réseau de bord (1) selon l'une des revendications précédentes, **caractérisé en ce que** le sous-réseau à basse tension (21) comprend un démarreur (26).

**5.** Procédé de fonctionnement d'un réseau de bord (1) destiné à un véhicule automobile, le réseau de bord (1) comprenant un sous-réseau à basse tension (21), destiné à au moins un consommateur à basse tension (29), et un sous-réseau à haute tension (20), destiné à au moins un consommateur à haute tension (25), et un générateur électrique (23), le sous-réseau à haute tension (20) étant relié au sous-réseau à basse tension (21) par le biais d'une unité de couplage (33) qui est conçue pour prendre de l'énergie au sous-réseau à haute tension (20) et l'acheminer au sous-réseau à basse tension (21), le sous-réseau à haute tension (20) comprenant une batterie (40) qui est conçue pour générer la haute tension et la délivrer au sous-réseau à haute tension (20) et qui comprend au moins deux unités de batterie (41) munies de prises de tension simples (42) qui sont amenées à l'unité de couplage (33), l'unité de couplage (33) étant conçue pour connecter sélectivement les unités de batterie (41) au sous-réseau à basse tension (21), et le sous-réseau à basse tension (21) comprenant au moins un autre accumulateur d'énergie (28) qui est conçu pour générer la basse tension et la délivrer au sous-réseau à basse tension (21), **caractérisé en ce que** l'unité de batterie (41) qui est connectée au sous-réseau à basse tension (21) est celle qui présente l'état de charge le plus élevé, un changement d'unité de batterie connectée (41) étant effectué à des instants où le courant de réseau de bord est le plus faible possible et une synchronisation avec un système de gestion de consommateurs est effectuée pour déconnecter brièvement des consommateurs de grande puissance afin de permettre la commutation sans baisse de tension significative car une unité de batterie (41) conductrice de courant étant déconnectée dans une première étape, puis une autre unité de batterie sélectionnée (41) étant connectée dans une deuxième étape, et la basse tension étant stabilisée par le stockage d'énergie (28) lors d'un changement d'unité de batterie connectée (41).

**6.** Procédé selon la revendication 5, **caractérisé en ce qu'**un changement d'unité de batterie connectée (41) est effectué lorsqu'une valeur seuil d'une différence d'état de charge des unités de batterie (41) est franchie vers le haut.

**7.** Système de gestion de batterie destinée à la mise en oeuvre de l'un des procédés selon l'une des revendications 5 et 6, ledit système comprenant une unité de détermination de l'état de charge d'unités de batterie (41) et une unité de commande d'une unité de couplage (33) pour connecter sélectivement des unités de batterie (41) en fonction d'états de charge des unités de batterie (41).

**8.** Logiciel conçu pour mettre en oeuvre l'un des procédés selon l'une des revendications 5 à 7, lorsque le logiciel est exécuté sur un équipement informatique programmable.

**9.** Véhicule automobile comprenant un moteur à combustion interne et un réseau de bord (1) selon l'une des revendications 1 à 4.

Fig. 1

Fig. 2

Fig. 3

Fig. 4

**Fig. 5**

Fig. 6

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011055217 A2
- WO 0137393 A1
- EP 2053717 A2